# EUROPEAN PATENT APPLICATION

(11) **EP 1 854 358 A1**
(43) Date of publication of application: **14.11.2007**
(21) Application number: 06425325.5
(22) Date of filing: 12.05.2006
(51) Int. Cl.: A21D 8/04, A21D 13/00

(54) **Compositions and sour doughs for baking low glycemic index bakery products and products thereof**

(71) Applicant: Millbo S.p.a., 28069 Trecate NO (IT)
(72) Inventor: Boggiani, Bruno, 28069 Trecate (Novara) (IT)
(74) Representative: Freyria Fava, Cristina

(57) **Abstract**

Compositions and sourdoughs for the production of low glycaemic index bakery products including:
i) acetic acid or one of its salts between 2 and 10% by weight;
ii) propionic acid or one of its salts between 5 and 15% by weight;
iii) lactic acid or one of its salts between 2 and 10% by weight; and
iv) fibre at least equal to 2% by weight.

## Description

### TEXT OF THE DESCRIPTION

The present invention concerns compositions and sourdoughs for use in the production of low glycaemic index bakery products and the resulting products, preferably low glycaemic index bread.

### TECHNICAL BACKGROUND TO THE INVENTION

Bread is a carbohydrate-based product that is widely consumed world-wide.

Over recent years, experts in human nutrition have developed a method to measure the rate of absorption of carbohydrates into the blood, for each foodstuff or class of foodstuffs. In particular, a method has been developed to connect the trend of the amount of sugar in the blood (glycaemia) after consumption of a foodstuff to a number, the so-called Glycaemic Index, known internationally as the GI. Application of this method to numerous foodstuffs has made it possible to draw up a table containing the glycaemic indices associated to the chief foodstuffs consumed by mankind.

Bread, whether baked with white flour or wholemeal flour, lies in the highest glycaemic index band, that is it is among those products with GI of 70 or above.

Patent documents that concern the production of bread and bakery products, as well as the relative processing intermediaries also known as sourdoughs, and again low glycaemic index bakery products, are very numerous.

As an example, patent application GB-A-1 575 101 may be mentioned, which concerns the production of a naturally-leavened sourdough, for the preparation of bread or confectionery, characterised by the addition to the mass of cereals of a culture of heterofermentative bacteria capable of forming lactic acid and acetic acid.

American patent US-A-5 500 231 relates to fermented sourdoughs containing, as starting material, cereals, a balanced quantity of water with pH below 4.2, a ratio by weight between lactic acid and acetic acid below 3, and organic and inorganic salts in a quantity between 2% and 8% by weight.

US patent US-A-4 034 125 relates to a sourdough for use in the preparation of bakery products containing a quantity of acetic acid between 2% and 15% by weight and a quantity of lactic acid between 2% and 8% by weight. Also present in the starting sourdough is a fat stabilising material in a quantity between 2.5% and 10% by weight.

Again, Japanese patent application JP-A-2001/204370 concerns the preparation of sourdough containing propionic acid in a quantity ranging from 0.05% to a maximum of 0.4% in order to improve the taste and smell of the bread. Propionic acid may be added directly to the mixture of flour and water or may be produced by propionibacteria present in the fermentative mixture.

With regard to patent documents concerning low glycaemic index bakery products, American patent applications US-A-2004/170738 and US-A-2005/0147725, international patent applications WO-A-03/037105 and WO-A-2005/077207 and French patent application FR-A-2 865 898 may be mentioned. The document US-A-2005/0147725 describes a low glycaemic index bakery product containing between 20% and 30% of protein, between 50% and 80% of fibre, up to 15% of fat and up to 2% of supplementary nutritional components selected from among amino acids, nutritional minerals and their mixtures. Patent application WO-A-03/037105 describes a low glycaemic index bread comprising flours of wheat, different types of grain or seeds containing soluble fibres and a "processed source" of soluble fibres, comprising rubbers, pectin extracts, plant extracts and extracts based on beta-glucanes.

Again in recent years, numerous scientific papers have been published that link a diet rich in high glycaemic index foodstuffs to the development of several different diseases connected to the metabolism of carbohydrates, such as diabetes, and also some diseases connected to an increased level of inflammation in the organism. A diet rich in high glycaemic index foodstuffs tends to introduce a phenomenon technically described as hypoglycaemia, which induces a need to consume foods, in particular sugars, that may, over time, trigger an excessive calorie intake, favouring the onset of obesity, including during the adolescent phase.

In the modern industrialised world the production of bread and similar bakery products (that is leavened bakery products and, more specifically, bakery products obtained by fermentation with yeast, i.e. *Saccharomyces Cerevisiae*) is based on a process that entails the fermentation of wheat flour by the action of live yeast cells. This process is normally rapid; however, over the last few decades the duration of the fermentation process has been further reduced to meet the industrial requirement to produce bread through a standardised and rapid process. Rapid fermentation by the action of a highly-specialised organism, such as yeast, enables a product to be obtained that has optimal qualities in terms of taste and smell, but however it does not enable a series of chemical compounds to develop that can form if the flour is subjected to a long fermentation process, including in the absence of yeast.

From these considerations the need and the interest arises to produce -- according to today's industrial criteria -- low glycaemic index bread and bakery products.

### DESCRIPTION OF THE INVENTION

The present invention aims to provide compositions and sourdoughs for use in the production of low glycaemic index bakery products.

Bakery products that can be obtained using the compositions and the sourdoughs subject of the present invention are characterised by the presence of some chemical compounds that interact with the absorption of the bakery product, preferably bread, by the human organism and reduce its Glycaemic Index.

Likewise object of the present invention are semi-finished products in powder or liquid form containing the compositions or the sourdoughs subject of the present invention, which -- added during the preparation of the white or wholemeal bread or similar products -- are capable of reducing the glycaemic index of the finished product, bringing it into the so-called medium glycaemic index band (56-69) or, if used in higher doses, into the low glycaemic index band (below 55) .

According to the present invention, this purpose is achieved thanks to solutions that are described specifically in the attached claims. The claims form an integral part of the technical instruction provided here in regard to the invention.

The invention concerns compositions and sourdoughs characterised by the presence of fibre and of organic acids or their salts, in particular quantities and ratios that -- added to the normal components used in the production of bakery products (such as flour, water, yeast and salt) -- enable low glycaemic index bakery products to be produced.

The present invention also concerns semi-finished products and bakery products obtained using the said compositions and/or sourdoughs.

### DETAILED DESCRIPTION OF THE INVENTION

The invention will now be described in detail, as the simple example without limiting intent, with reference to particular embodiments, without however intending to limit it to these.

It should be remembered that the functional ingredients (fibres and organic acids or their salts) necessary to lower the glycaemic index of a bakery product may be obtained i) utilising a "synthetic" composition containing the same ingredients produced by chemical synthesis, or ii) using sourdough technology.

### EXAMPLE 1.

The compositions subject of the present invention are characterised by the presence of the following ingredients:
-- organic acids and/or their salts and, in particular, acetic acid, lactic acid, malic acid, propionic acid, butyric acid and/or succinic acid; and
-- dietary fibres.

The presence of specific ingredients, and likewise the absence of other ingredients, and the ratio among them, is what makes the composition subject of the present invention unique and determines its characteristics, making it suitable for the production of low glycaemic index bread.

More specifically, the composition subject of the present invention includes the ingredients listed in Table 1 in the quantities indicated.

**Table 1.**

| **Ingredient** | **Quantity % by weight** |
|---|---|
| propionic acid or one of its salts | 5 - 15% |
| acetic acid or one of its salts | 2 - 10% |
| lactic acid or one of its salts | 2 - 10% |
| succinic acid or one of its salts | 0 - 5% |
| malic acid or one of its salts | 0 - 5% |
| butyric acid or one of its salts | 0 - 5% |
| fibres | 2 - 20% |

The salts of the organic acids are at obtained by successive salifications with ions of sodium, calcium or analogous alkaline or alkaline-earth elements.

### EXAMPLE 2.

The production of (dehydrated) sourdoughs is a process well known to the specific industry and commonly applied by various manufacturers.

Sourdoughs are a mixture of flour and water in which appropriate bacteria cause acid fermentation. Wheat flour is mixed with water, normally in the proportion of 1 kg of flour to 800-1200 g of water and then left to foment at a temperature between 25 and 35 degrees. The dough is mixed again at specific intervals of time to encourage oxygenation. Fermentation may be achieved by leaving the micro-organisms naturally present in the air to work or, better, by adding selected micro-organisms cultivated externally. In practice, cultures of bacteria normally available in lyophilised form are used. At the end of the fermentation, the humidity of the dough is reduced by adding further flour (traditional process) or by dehydrating with appropriate instruments.

The sourdoughs on the market today are used to flavour bread or to improve the rheological properties of the dough and may be sold as such or as an ingredient of a semi-finished product.

The sourdough subject of the present invention presents a predetermined ratio among the various acids present (acetic acid, lactic acid, malic acid, propionic acid, butyric and/or succinic acid), among their salts and among the other ingredients, independent of whether these are used to prepare the sourdough itself or are added -- for example by adding the composition subject of the present invention -- in a subsequent phase.

The sourdoughs subject of the present patent application may also contain all the other metabolites typical of known fermentations, and may also contain derivatives of cereals such as:
- wheat germ,
- wheat starch, and/or
- wheat gluten.

These same ingredients may be used directly in the production of the sourdough either in their native condition or after heat treatment.

The sourdough may be in the form of powder, that is made up of a mixture of powders, or in liquid form, whether this liquid be the result of a suspension process or a solubilisation process of the characterising ingredients in the prefixed ratios.

More specifically, the sourdough subject of the present invention comprises, among others, the ingredients listed in Table 2.

**Table 2.**

| **Ingredient** | **Quantity % by weight** |
|---|---|
| propionic acid or one of its salts | 5 - 15% |
| acetic acid or one of its salts | 2 - 10% |
| lactic acid or one of its salts | 2 - 10% |
| succinic acid or one of its salts | 0 - 5% |
| malic acid or one of its salts | 0 - 5% |
| butyric acid or one of its salts | 0 - 5% |

These ingredients may be the result of fermentation of the flour (classic preparation of "sourdough", preferably in the presence of propionibacteria), or they may be present by direct addition of the compound obtained by chemical synthesis.

Other ingredients characterising the sourdough are:
-- total dietary fibre: between 2 and 20%, and/or
-- wheat germ: between 5 and 15%.

A particularly preferred composition of the sourdough subject of the present invention is illustrated in Table 3.

**Table 3.**

| **Ingredient** | **Quantity % by weight** |
|---|---|
| acetic acid or one of its salts | 2-5% |
| propionic acid or one of its salts | 10-15% |
| lactic acid or one of its salts | 3-8% |
| malic acid + butyric acid + succinic acid or their salts | 0-2% |
| fibre | ≥10% |

The semi-finished products obtained using the sourdough subject of the present invention may contain
-- in a percentage between 30% and 100% by weightone or more dehydrated sourdoughs obtained through traditional processes or through specific processes that entail the use of particular bacteria known as propionibacteria. The semi-finished product may, furthermore, contain the typical metabolites of the fermentation of flour and of other dietary ingredients typically used in the preparation of bread, likewise the specific metabolites of the fermentation of flours, products extracted or transformed from wheat, mixtures of flours and milk and its derivatives, obtained through the action of propionibacteria.

The low glycaemic index bread subject of the present invention is produced with the help of the sourdough described above contained in variable percentages but, in any case, between 2% and 15% by weight. Such bread will be characterised by a glycaemic index between 35 and 55, thus reduced by between 25% and 50% with regard to bread produced without the sourdough subject of the present invention.

Low glycaemic index bread produced according to the present technical solution presents a composition as illustrated in Table 4.

**Table 4.**

| **Ingredient** | **Quantity % by weight** |
|---|---|
| wheat flour | 45-65% |
| sourdough according to the present invention | 2-15% |
| salt | 1-2% |
| water | 30-45% |
| yeast | 1-3% |

Naturally, the details of production and the embodiments may be widely varyied with regard to what is described and illustrated here without thereby departing from the sphere of protection of the present invention, as defined by the attached claims.

## Claims

1. Composition for the preparation of low glycaemic index bakery products comprising:
i) acetic acid or one of its salts between 2 and 10% by weight;
ii) propionic acid or one of its salts between 5 and 15% by weight;
iii) lactic acid or one of its salts between 2 and 10% by weight; and
iv) fibre equal to at least 2% by weight.

2. Composition according to claim 1, **characterised in that** it includes succinic acid or one of its salts in a quantity between 0.0001 and 5% by weight.

3. Composition according to claim 1 or claim 2, **characterised in that** it includes malic acid or one of its salts in a quantity between 0.0001 and 5% by weight.

4. Composition according to any of the above claims, **characterised in that** it includes butyric acid or one of its salts in a quantity between 0.0001 and 5% by weight.

5. Composition according to the claims from 2 to 4 taken in combination, **characterised in that** the sum of the quantities of succinic acid, malic acid and butyric acid is between 0.001 and 5% by weight.

6. Composition according to any of the above claims, **characterised in that** it includes wheat germ, wheat starch and/or wheat gluten.

7. Composition according to any of the above claims, **characterised in that** it also includes wheat germ in a quantity between 5 and 15% by weight.

8. Composition according to any of the above claims, **characterised in that** the salts of the acids are salts of alkaline or alkaline-earth metals.

9. Composition according to any of the above claims, **characterised in that** the acetic acid or its salt is present in a quantity between 2 and 5% by weight.

10. Composition according to any of the above claims, **characterised in that** the lactic acid or its salt is present in a quantity between 3% and 8% by weight.

11. Composition according to any of the above claims, **characterised in that** the propionic acid or its salt is present in a quantity between 10 and 15% by weight.

12. Composition according to any of the above claims, **characterised in that** the fibre is present in a quantity between 5 and 20% by weight, preferably between 5 and 10% by weight.

13. Composition according to any of the above claims in the form of powder, preferably in dehydrated form.

14. Composition according to any of the above claims in liquid form.

15. Sourdough for the preparation of bakery low glycaemic index products including:
i) acetic acid or one of its salts between 2 and 10% by weight;
ii) propionic acid or one of its salts between 5 and 15% by weight;
iii) lactic acid or one of its salts between 2 and 10% by weight; and
iv) fibre equal to at least 2% by weight.

16. Sourdough according to claim 15, **characterised in that** it includes succinic acid or one of its salts in a quantity between 0.0001 and 5% by weight.

17. Sourdough according to claim 15 or claim 16, **characterised in that** it includes malic acid or one of its salts in a quantity between 0.0001 and 5% by weight.

18. Sourdough according to any of the claims from 15 to 17, **characterised in that** it includes butyric acid or one of its salts in a quantity between 0.0001 and 5% by weight.

19. Sourdough according to the claims from 15 to 18 taken in combination, **characterised in that** the sum of the quantities of succinic acid, malic acid and butyric acid is between 0.001 and 5% by weight.

20. Sourdough according to any of the claims from 15 to 19, **characterised in that** it includes wheat germ, wheat starch and/or wheat gluten.

21. Sourdough according to any of the claims from 15 to 20, **characterised in that** it also includes wheat germ in a quantity between 5 and 15% by weight.

22. Sourdough according to any of the claims from 15 to 21, **characterised in that** the salts of the acids are salts of alkaline or alkaline-earth metals.

23. Sourdough according to any of the claims from 15 to 22, **characterised in that** the acetic acid or its salt is present in a quantity between 2 and 5% by weight.

24. Sourdough according to any of the claims from 15 to 23, **characterised in that** the lactic acid or its salt is present in a quantity between 3 and 8% by weight.

25. Sourdough according to any of the claims from 15 to 24, **characterised in that** the propionic acid or its salt is present in a quantity between 10 and 15% by weight.

26. Sourdough according to any of the claims from 15 to 25, **characterised in that** the fibre is present in a quantity between 5 and 20% by weight, preferably between 5 and 10% by weight.

27. Sourdough according to any of the claims from 15 to 26 in powder form, preferably in dehydrated form.

28. Sourdough according to any of the claims from 15 to 26 in liquid form.

29. Use of the composition according to any of the claims from 1 to 14 to prepare sourdoughs.

30. Use of the composition according to any of the claims from 1 to 14 to prepare low glycaemic index bakery products.

31. Use of the sourdough according to any of the claims from 15 to 28 to prepare low glycaemic index bakery products.

32. Semi-finished products for the production of low glycaemic index bakery products including:
i) the composition according to any of the claims from 1 to 14; and/or
ii) the sourdough according to any of the claims from 15 to 28.

33. Low glycaemic index bakery products produced using:
i) the composition according to any of the claims from 1 to 14; and/or
ii) the sourdough according to any of the claims from 15 to 28.

34. Bakery product according to claim 33, **characterised in that** said composition or said sourdough is used in a quantity between 2 and 25% by weight, preferably between 2 and 15% by weight.

35. Bakery product according to claim 33 or claim 34, **characterised in that** said bakery product contains cereal flours in a quantity between 45 and 65% by weight.
